# EUROPEAN PATENT SPECIFICATION

(11) **EP 4 027 336 B1**
(45) Date of publication and mention of the grant of the patent: **15.11.2023**
(21) Application number: 22176183.6
(22) Date of filing: 30.05.2022
(51) Int. Cl.: G10L 15/22, G01C 21/36, B60R 16/037

(54) **CONTEXT-DEPENDENT SPOKEN COMMAND PROCESSING**
KONTEXT-ABHÄNGIGE VERARBEITUNG EINES SPRACHBEFEHLS
TRAITEMENT DÉPENDENT DU CONTEXT DE COMMANDE VOCALE

(30) Priority: 08.06.2021 CN 202110636590
(43) Date of publication of application: 13.07.2022
(73) Proprietor: Apollo Intelligent Connectivity (Beijing) Technology Co., Ltd., Beijing 100176 (CN)
(72) Inventor: Zeng, Fanguang, Beijing, 100176 (CN)
(74) Representative: Nederlandsch Octrooibureau

(56) References cited:
- CN-A- 109 584 871
- CN-A- 111 768 776
- US-A1- 2017 242 657

## Description

### TECHNICAL FIELD

The present disclosure relates to a technical field of computers, particularly to technical fields of artificial intelligence such as voice recognition and smart voice, and more particularly to a method and apparatus for executing an instruction, an electronic device, a computer readable storage medium, and a computer program product.

### BACKGROUND

To use a voice in a vehicle, it is generally necessary to trigger a voice function by a voice wake-up word or a button on a steering wheel, to enter a recognition interaction state. In this case, a corresponding command is sent to the in-vehicle machine via the voice. This process is referred to as a wake-up voice. In order to facilitate a user to use the voice more conveniently and quickly, a number of high-frequency words will generally be defined as free-of-wakeup words. That is, the user may directly say a free-of-wakeup word without using the wake-up voice, and the in-vehicle machine can also execute a corresponding action, e.g., the free-of-wakeup word may be, for example, previous, next, play, pause, start navigation, or exit navigation.

CN patent application CN 111768776 discloses an in-vehicle voice control method. The disclosed method includes: determining the position of a user sending a voice instruction and/or the category of the user through a microphone, a gravity sensor and/or a camera arranged in a vehicle; determining the control authority of the user for the task corresponding to the voice instruction according to the position of the user and/or the user category; and controlling the execution of a task corresponding to the voice instruction according to the control authority of the user. According to the invention, the control authority of the user is determined according to the position of the user and/or the user category.

CN patent application CN 109584871 discloses a method and device for recognizing identity of user giving voice command in automobile. The disclosed method includes: step 101, receiving the voice command sent by the user; step 102, determining the number of users in the automobile and the user identity of each user, wherein the user identity of each user is one of preset user identities; and step 103, taking the user identity of the user as the user identity of the voice command if the number of the users is 1, and recognizing the user identity of the voice command on the basis of beam forming of a microphone array when the number of the users is more than 1.

US patent application US 2017242657 A1 discloses systems and methods for receiving a voice command and determining an appropriate action for the media playback system to execute based on user identification. The disclosed systems and methods receive a voice command for a media playback system, and determines whether the voice command was received from a registered user of the media playback system. In response to determining that the voice command was received from a registered user, the systems and methods configure an instruction for the media playback system based on content from the voice command and information in a user profile for the registered user.

### SUMMARY

In accordance with the invention a method for executing an instruction, an apparatus for executing an instruction, an electronic device, a computer readable storage medium, and a computer program product as defined by claims 1, 7, 13, 14 and 15, respectively, are proviced.

In a first aspect, an embodiment of the present invention as defined by claim 1 presents a method for executing an instruction, including: receiving a transmitted actual voice instruction; determining a target location where the actual voice instruction is released; acquiring a target valid instruction set corresponding to the target location; and executing an operation corresponding to the actual voice instruction, in response to the actual voice instruction being a target valid instruction in the target valid instruction set, where, after receiving the transmitted actual voice instruction, and before determining the target location where the actual voice instruction is released, the method further comprises: acquiring voice information in a preset duration before a collecting time of collecting the actual voice instruction and the preset duration after the collecting time; and in response to a correlation between the voice information and the actual voice instruction being greater than a preset correlation, determining that the voice information is not sent to execute the operation corresponding to the actual voice instruction, and shielding the actual voice instruction.

In a second aspect, an embodiment of the present invention as defined by claim 7 presents an apparatus for executing an instruction, including: an instruction receiving unit configured to receive a transmitted actual voice instruction; a location determining unit configured to determine a target location where the actual voice instruction is released; a valid instruction set acquiring unit configured to acquire a target valid instruction set corresponding to the target location; and an instruction executing unit configured to execute an operation corresponding to the actual voice instruction, in response to the actual voice instruction being a target valid instruction in the target valid instruction set, where the apparatus further comprises: a voice information extracting unit configured to acquire voice information in a preset duration before a collecting time of collecting the actual voice instruction and the preset duration after the collecting time; and a second instruction shielding unit configured to determine that the voice information is not sent to execute the operation corresponding to the actual voice instruction and shield the actual voice instruction, in response to a correlation between the voice information and the actual voice instruction being greater than a preset correlation.

In a third aspect, an embodiment of the present invention as defined by claim 13 provides an electronic device, including: at least one processor; and a memory communicatively connected to the at least one processor; where the memory stores instructions executable by the at least one processor, and the instructions are executed by the at least one processor, such that the at least one processor can execute the method for executing an instruction according to any one implementation in the first aspect.

In a fourth aspect, an embodiment of the present invention as defined by claim 14 provides a non-transitory computer readable storage medium storing computer instructions, where the computer instructions are used for causing a computer to execute the method for executing an instruction according to any one implementation in the first aspect.

In a fifth aspect, an embodiment of the present invention as defined by claim 15 provides a computer program product including a computer program, where the computer program, when executed by a processor, implements the method for executing an instruction according to any one implementation in the first aspect.

In the method and apparatus for executing an instruction, the electronic device, the computer readable storage medium, and the computer program product provided in embodiments of the present disclosure, when receiving a transmitted actual voice instruction, a target location where the actual voice instruction is released is determined; a target valid instruction set corresponding to the target location is acquired; and an operation corresponding to the actual voice instruction is executed, in response to the actual voice instruction being a target valid instruction in the target valid instruction set.

In the present disclosure, when receiving the transmitted actual voice instruction, the target valid instruction set corresponding to the target location where the actual voice instruction is released is acquired, and it is determined whether the actual voice instruction is a valid voice instruction based on a relationship between the actual voice instruction and the target valid instruction set, thereby achieving a purpose of determining a validity of the actual voice instruction based on the location where the actual voice instruction is released, and reducing a frequency of false triggering.

It should be understood that contents described in the SUMMARY are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

After reading detailed descriptions of non-limiting embodiments with reference to the following accompanying drawings, other features, objectives and advantages of the present disclosure will become more apparent.
Fig. 1 is an exemplary system architecture in which embodiments of the present disclosure may be implemented;
Fig. 2 is a flowchart of a method for executing an instruction provided in an embodiment of the present disclosure;
Fig. 3 is a flowchart of another method for executing an instruction provided in an embodiment of the present disclosure;
Fig. 4a and Fig. 4b are schematic diagrams of an effect of a method for executing an instruction in an application scenario provided in an embodiment of the present disclosure;
Fig. 5 is a structural block diagram of an apparatus for executing an instruction provided in an embodiment of the present disclosure; and
Fig. 6 is a schematic structural diagram of an electronic device adapted to execute a method for executing an instruction provided in embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications can be made to the embodiments described here without departing from the scope and spirit of the present disclosure. Similarly, for clearness and conciseness, descriptions of well-known functions and structures are omitted in the following description. It should be noted that some embodiments in the present disclosure and some features in the embodiments may be combined with each other on a non-conflict basis.

In addition, in the technical solutions involved in the present disclosure, the involved acquisition, storage, and application of personal information of a user are in conformity with relevant laws and regulations, and do not violate public order and good customs.

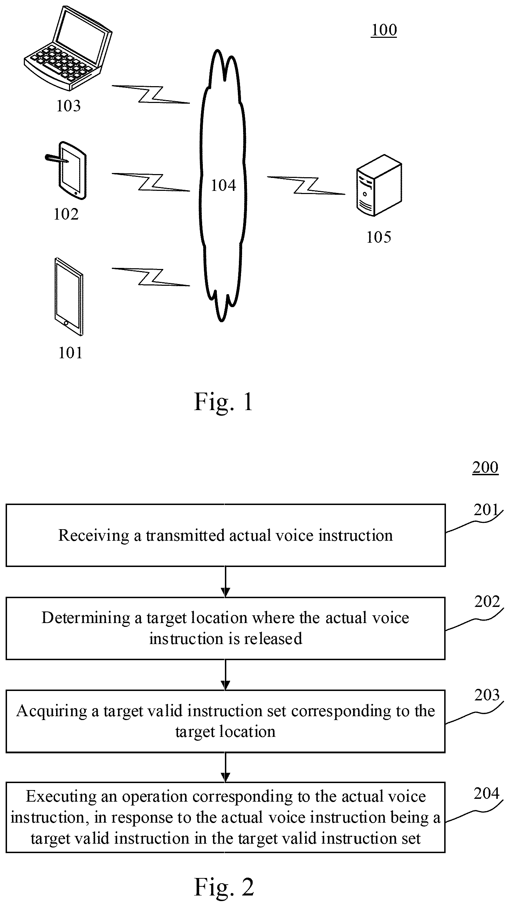

Fig. 1 shows an exemplary system architecture 100 in which a method for executing an instruction, an apparatus for executing an instruction, an electronic device, and a computer readable storage medium of embodiments of the present disclosure may be implemented.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless communication links, or optical cables.

A user may interact with the server 105 using the terminal devices 101, 102, and 103 via the network 104, e.g., to receive or send a message. The terminal devices 101, 102, and 103 and the server 105 may be provided with various applications for implementing information communication between the terminal device and the server, such as a navigation application, a function integrated application, and an instant messaging application.

The terminal devices 101, 102, and 103 and the server 105 may be hardware, or may be software. When the terminal devices 101, 102, and 103 are hardware, the terminal devices may be various electronic devices implementing man-machine interaction based on a voice instruction, including but not limited to a smart phone, a tablet computer, or the like. When the terminal devices 101, 102, and 103 are software, the terminal devices may be installed in the above-listed electronic devices. The terminal devices may be implemented as a plurality of software programs or software modules, or as a single software program or software module. This is not specifically limited here. When the server 105 is hardware, the server may be implemented as a distributed server cluster composed of a plurality of servers, or may be implemented as a single server. When the server 105 is software, the server may be implemented as a plurality of software programs or software modules, or may be implemented as a single software program or software module. This is not specifically limited here.

The terminal devices 101, 102, and 103 may provide various services through various built-in applications, e.g., a function-integrated application capable of providing various functions. When running the function-integrated application, the terminal devices 101, 102, and 103 may implement the following effects: first, the terminal device 101 receives a transmitted actual voice instruction; then, the terminal devices 101, 102, and 103 may determine a target location where the actual voice instruction is released; then, the terminal devices 101, 102, and 103 acquire a valid instruction set corresponding to the target location; and finally, the terminal devices 101, 102, and 103 execute an operation corresponding to the actual voice instruction, in response to the actual voice instruction being a target valid instruction in the target valid instruction set.

It should be stated that the operation corresponding to the voice instruction may be an operation executed at the server 105 or an operation executed in the terminal devices 101, 102, and 103. Therefore, when the operation corresponding to the actual voice instruction may be implemented based on the terminal devices 101, 102, and 103, the exemplary system architecture 100 may not include the server 105 or the network 104.

Since man-machine interaction is implemented by a voice, a high response speed is usually required. Therefore, the method for executing an instruction provided in the subsequent embodiments of the present disclosure is generally implemented by the terminal devices 101, 102, and 103 (for example, a vehicle terminal device within a vehicle in a driving scenario), in order to provide the user with a timely response. However, in addition, it should also be stated that in some optional implementation scenarios of the present disclosure, if content of the actual voice instruction is complex, and analyzing and acquiring the content in the actual voice instruction require a high computing power or more computing resources, or the operation corresponding to the actual voice instruction requires a high computing power or more computing resources, the method for executing an instruction may also be executed by the server 105. In this case, the server 105 may communicate with the terminal devices 101, 102, and 103 through the network, such that after the actual voice instruction transmitted by the user is acquired from a terminal device in the server 105, the remaining process in the method for executing an instruction is completed, and finally the operation corresponding to the actual voice instruction is executed in the server 105, thereby providing more operations using the server having a strong computing power and more computing resources.

In addition, when there are various terminal devices having different computing powers, but the function-integrated application determines that the interaction between the terminal device and the server and the response speed meet the requirements, the method for executing an instruction may be implemented by using the terminal devices 101, 102, and 103 and the server 105 together, thereby appropriately reducing a computing pressure of the terminal devices 101, 102, and 103. Accordingly, the apparatus for executing an instruction may also be provided in the terminal devices 101, 102, and 103 and the server 105.

It should be understood that any number of terminal devices, networks, and servers may be provided based on specific actual requirements in different application scenarios of contents of the present disclosure.

Referring to Fig. 2, Fig. 2 is a flowchart of a method for executing an instruction provided in an embodiment of the present disclosure, where a process 200 includes the following steps.

Step 201: receiving a transmitted actual voice instruction.

In the present embodiment, an executing body (e.g., the terminal devices 101, 102, and 103 shown in Fig. 1) of the method for executing an instruction receives the actual voice instruction transmitted by a user for indicating a desired operation.

In practice, for the actual voice instruction as received, if the actual voice instruction is included in a piece of complete voice information, extraction and/or normalization may be further performed on the acquired complete voice information using a preset voice instruction database, to obtain the actual voice instruction included therein.

In some optional embodiments, semantic normalization may be performed based on the obtained actual voice instruction, so as to obtain a more accurate actual voice instruction that can be completely recognized and read by the executing body.

It should be stated that the actual voice instruction may also be a simplified voice instruction simplified based on a preset correspondence. After receiving the simplified voice instruction, the executing body acquires a corresponding actual voice instruction based on the preset correspondence. In this case, a file recording the correspondence between the simplified voice instructions and corresponding actual voice instructions may be acquired by the executing body directly from a local storage device, or from a non-local storage device (for example, other terminal devices 101, 102, and 103 that are not the executing body shown in Fig. 1). The local storage device may be a data storage module provided within the executing body, such as a server hard disk. In this case, the file recording the correspondence between the simplified voice instructions and the corresponding actual voice instructions may be quickly read locally. The non-local storage device may further be any other electronic devices provided to store data, such as some user terminals. In this case, the executing body may send an acquiring command to the electronic device to acquire the required file recording the correspondence between the simplified voice instructions and the corresponding actual voice instructions.

Step 202: determining a target location where the actual voice instruction is released.

In the present embodiment, when receiving the transmitted actual voice instruction, the executing body determines the target location where the actual voice instruction is released. The target location is a location where a sound source (for example, the user) that releases the actual voice instruction is located.

In some optional embodiments, a method of determining the target location where the actual voice instruction is released may be that: when there is multiple sound collecting devices with different orientation angles, the executing body acquires, based on a sound intensity of each collecting device, a direction of the sound source and a distance between the user releasing the actual voice instruction and the collecting device.

Step 203: acquiring a target valid instruction set corresponding to the target location.

In the present embodiment, after determining the target location where the actual voice instruction is released, the target valid instruction set corresponding to the target location is acquired. Multiple valid instructions are recorded in the target valid instruction set. When the actual voice instruction is identical with a target valid instruction in the multiple valid instructions, the actual instruction is determined as a valid voice instruction.

Valid instruction information recorded in the target valid instruction set may be set based on functions that can be provided by the executing body and are allowed to be invoked by the user at the target location.

Further, in order to reduce a problem of inaccurate target location recognition caused by a collection error when determining the target location of the actual voice instruction, an area where the actual voice instruction is collectable in the method for executing an instruction is divided to obtain multiple different target location areas, and then a corresponding target valid instruction set is set by using a target location area as a unit.

In practice, after determining a target location area to which the target location where the actual instruction is released belongs, feedback information is sent to verify whether the user is located in the target location area.

Step 204: executing an operation corresponding to the actual voice instruction, in response to the actual voice instruction being a target valid instruction in the target valid instruction set.

In the present embodiment, when determining that the actual voice instruction is a target valid instruction in the target valid instruction set, i.e., there is a target valid instruction corresponding to the actual voice instruction in the target valid instruction set, the executing body determines the actual voice instruction as a valid instruction, and executes the operation corresponding to the actual voice instruction.

In the method for executing an instruction provided in an embodiment of the present disclosure, when receiving the transmitted actual voice instruction, the target valid instruction set corresponding to the target location where the actual voice instruction is released is acquired, and whether the actual voice instruction is a valid voice instruction is determined based on a relationship between the actual voice instruction and the target valid instruction set, thereby achieving the purpose of determining the validity of the actual voice instruction based on the location where the actual voice instruction is released, and reducing the frequency of false triggering.

In some optional implementations of the present embodiment, in order to achieve the above purpose of reducing the frequency of false triggering, in response to the actual voice instruction not being any target valid instruction in the target valid instruction set, the actual voice instruction is shielded to avoid false triggering.

In some optional implementations of the present embodiment, the method for executing an instruction further includes: feeding back a prompt message of the target valid instruction set at the target location through a preset path, in response to a shielding number of consecutively shielding identical and/or different actual voice instructions within a preset duration exceeding a preset threshold.

Specifically, after the executing body consecutively shields the identical and/or different actual voice instructions within the preset duration, if the shielding number of consecutively shielding the identical and/or different actual voice instructions exceeds the preset threshold, the prompt message related to the target valid instruction set at the target location is fed back through the preset path. As such, the user is informed an executable valid instructions based on a content of the prompt message, and makes corresponding instruction selection and adjustment, thereby avoiding the problem of poor user interaction experience caused by the user failing to get a feedback and failing to achieve an operation purpose after sending the actual voice instruction many times since the user does not understand the valid instructions, and improving the user experience.

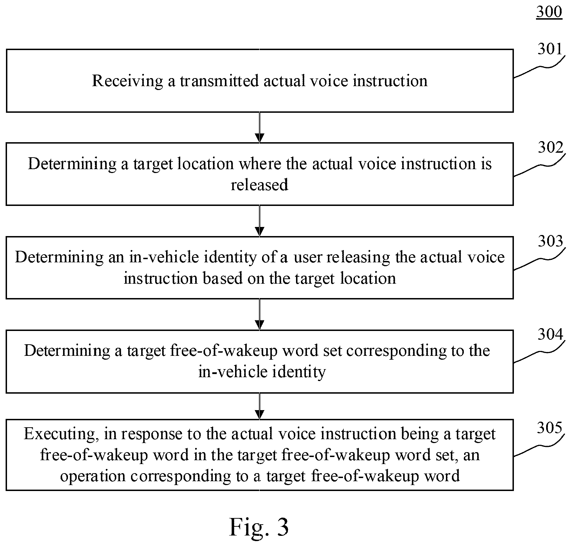

Referring to Fig. 3 on the basis of the above embodiments, Fig. 3 is a flowchart of another method for executing an instruction provided in an embodiment of the present disclosure and applicable to an in-vehicle scenario, where a process 300 includes the following steps.

Step 301: receiving an transmitted actual voice instruction.

Step 302: determining a target location where the actual voice instruction is released.

The above steps 301 to 302 are consistent with the steps 201 to 202 shown in Fig. 2, and corresponding portions of the above embodiment may be referred thereto. The description will not be repeated here.

Step 303: determining an in-vehicle identity of a user releasing the actual voice instruction based on the target location.

In the present embodiment, after the target location where the actual voice instruction is released is determined based on the above step 302, the in-vehicle identity of the user, such as a driver, a codriver, and a rear seat passenger, may be determined based on a location of the target location within a vehicle.

Step 304: determining a target free-of-wakeup word set corresponding to the in-vehicle identity.

In the present embodiment, a free-of-wakeup word refers to a word that can be used by a user to wake up an in-vehicle machine without additionally using a wake-up voice, and can be directly received by an in-vehicle machine to make a responsive action. After the in-vehicle identity of the user is determined based on the above step 303, the target free-of-wakeup word set corresponding to the in-vehicle identity may be determined.

The target free-of-wakeup word set corresponding to the in-vehicle identity records valid actual voice instructions for the in-vehicle identity to use. For example, when the in-vehicle identity is the driver, the valid actual voice instructions in the target free-of-wakeup word set may be set as "start navigation" or "leave for destination B". When the in-vehicle identity is the codriver, the valid actual voice instructions in the target free-of-wakeup word set may be set as, e.g., "adjust the air conditioner in the codriver subarea to a temperature of 26 degrees". When the in-vehicle identity is the rear seat passenger, the valid actual voice instructions in the target free-of-wakeup word set may be set as, e.g., "turn off the rear air conditioner" or "open the rear blinds."

Step 305: executing, in response to the actual voice instruction being a target free-of-wakeup word in the target free-of-wakeup word set, an operation corresponding to a target free-of-wakeup word.

In the present embodiment, the actual voice instruction is determined to be a target free-of-wakeup word of the target free-of-wakeup words, the actual voice instruction corresponding to the free-of-wakeup word is determined to be a valid instruction, and the operation corresponding to the target free-of-wakeup word is executed.

In practice, when the executing body is embodied as the in-vehicle machine within the vehicle, in order to implement the operation corresponding to the target free-of-wakeup word, after a receiving device of the in-vehicle machine receives the free-of-wakeup word and determines to execute the operation corresponding to the target free-of-wakeup word, the in-vehicle machine may actively wake up an on-board voice assistant, and control the on-board voice assistant to execute the operation corresponding to the target free-of-wakeup word.

Based on the corresponding embodiment of the above Fig. 2, the present embodiment may determine a corresponding operation authority based on the user identity in combination with an actual application scenario, thereby facilitating setting a corresponding free-of-wakeup word based on the operation authority. As such, it is closer to a specific usage scenario whilst reducing the frequency of false triggering, simplifying the contents in the target valid instruction set whilst guaranteeing the user experience, and saving storage resources.

In some optional implementations of the present embodiment, the method for executing an instruction further includes: acquiring user identity information of users entering locations in a target space; determining, in response to determining that a user of the users is a new user at a corresponding location of the locations in the target space based on the user identity information, a target presentation manner of the corresponding location where the new user is located in the target space; and presenting a target valid instruction set corresponding to the corresponding location where the new user is located in the target space to the new user in the target presentation manner.

Specifically, further, the identity information entering the target space (such as an in-vehicle space involved in the present embodiment) may be acquired, whether a user has been in a location where the user is located this time may be determined based on the user identity information, a target presentation manner for responding may be determined based on the location in response to the user having not been in the location, and the valid instruction set corresponding to the location may be presented to the user based on the target presentation manner. As such, a newly entering user knows about the actual voice instructions available for implementing voice control, thereby facilitating the users to use.

The target presentation manner may generally be determined based on presentation capabilities at different locations in the target space. For example, in the in-vehicle scenario, if the location is a front seat location, presentation may be performed on an in-vehicle machine screen in an in-vehicle center control platform. If the location is a rear seat location, presentation may be set to be performed through an in-vehicle sound playing device.

On the basis of any one of the above embodiments, in order to reduce false responses to voice information released by the user (for example, the user is making a call and does not wishes to release an actual voice instruction, but the voice information released by the user involves the actual voice instruction), after receiving the transmitted actual voice instruction, and before determining the target location where the actual voice instruction is released, the method for executing an instruction further includes, in accordance with the invention: acquiring voice information in a preset duration before a collecting time of the actual voice instruction and a preset duration after the collecting time; and shielding the actual voice instruction, in response to a correlation between the voice information and the actual voice instruction being greater than a preset correlation.

Specifically, in accordance with the invention, after receiving the transmitted actual voice instruction, the executing body acquires the voice information in the preset duration before a collecting time of the actual voice instruction and the preset duration after the collecting time, verifies the content in the voice information to obtain a correlation between the actual voice instruction in the voice information and other portions of contents in the voice information, determines that the voice information is not sent to the executing body when the correlation is greater than a preset correlation, i.e., the actual voice instruction included therein is not formed based on the user desire of execution of the instruction, and shields the actual voice instruction, to prevent misrecognition.

Further, in some optional embodiments, whether the actual voice instruction is sent to the executing body may be determined based on a proportional between the number of characters included in the information of the actual voice instruction and the number of characters included in the voice information, so as to achieve the purpose of preventing misrecognition as well.

On the basis of any one of the above embodiments, in order to improve a validity of the contents contained in the target valid instruction set, and to configure the contents in the target valid instruction set based on the actual user needs, the method for executing an instruction further includes: receiving an transmitted instruction updating request; acquiring, in response to a sending location of the instruction updating request having an updating authority, indication information of an actual voice instruction set corresponding to the instruction updating request, content of a to-be-updated actual voice instruction and a type of an updating operation; and updating the target valid instruction set indicated by the indication information of the actual voice instruction set based on the content of the to-be-updated actual voice instruction and the type of the updating operation.

Specifically, when receiving the transmitted instruction updating request, the executing body determines whether the sending location where the instruction updating request is sent has the updating authority, and acquires, in response to the sending location having the updating authority, the indication information of the actual voice instruction set corresponding to the instruction updating request, the content of the to-be-updated actual voice instruction and the type of the updating operation, where the indication information of the actual voice instruction set is information of target valid instructions that the user selects and wishes to update, so as to determine a corresponding target valid instruction set including the selected target valid instructions based on the information, the content of the to-be-updated actual voice instruction is the content of a specific actual voice instruction that the user wishes to update, and the type of the updating operation may be, e.g., adding the content of the to-be-updated actual voice instruction to the target valid instruction set or deleting the content of the to-be-updated actual voice instruction in the target valid instruction set.

In practice, the user may be provided with an updating configuration file set in advance based on the identity information, thereby directly invoking the updating configuration file for configuration when updating the target valid instruction set, and further improving an updating efficiency of the target valid instruction set.

To deepen understanding, the present disclosure further provides a specific implementation scheme in combination with a specific application scenario. In this application scenario, a user A and a user B successively release actual voice instructions to a in-vehicle machine 401, a specific process being as follows.

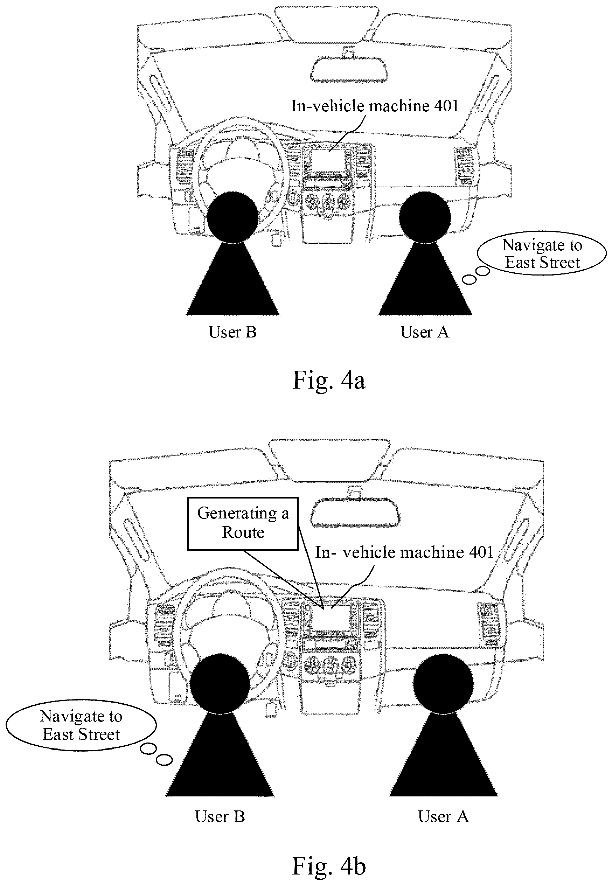

After receiving an actual voice instruction "Navigate to East Street" transmitted from the user A (referring to Fig. 4a), the in-vehicle machine 401 determines a target location where the actual voice instruction is released, and determines that an in-vehicle identity corresponding to the user A is a codriver based on the target location.

A target valid instruction set corresponding to the codriver identity is acquired. Here, the target valid instruction set includes "increase the temperature of the air conditioner in the codriver area by one degree centigrade," "open the window in the codriver area by 50%," and "close the window in the codriver area," but does not include the content related to "Navigate to East Street." Therefore, "Navigate to East Street" transmitted by the user A is shielded.

Further, after receiving the actual voice instruction "Navigate to East Street" transmitted by the user B (referring to Fig. 4b), the in-vehicle machine 401 determines the target location where the actual voice instruction is released, and determines that an in-vehicle identity corresponding to the user B is a driver based on the target location.

A target valid instruction set corresponding to the driver identity is acquired. Here, the target valid instruction set includes "navigate to" and "open the window in the main driving area by 50%," where "navigate to" corresponds to the content of "Navigate to East Street," and "Navigate to East Street" may be determined to be a target valid instruction in the target valid instruction set corresponding to the driver identity. Therefore, generating a navigation route to "East Street" is executed (referring to Fig. 4b, "Route is being generated" is displayed in the in-vehicle machine).

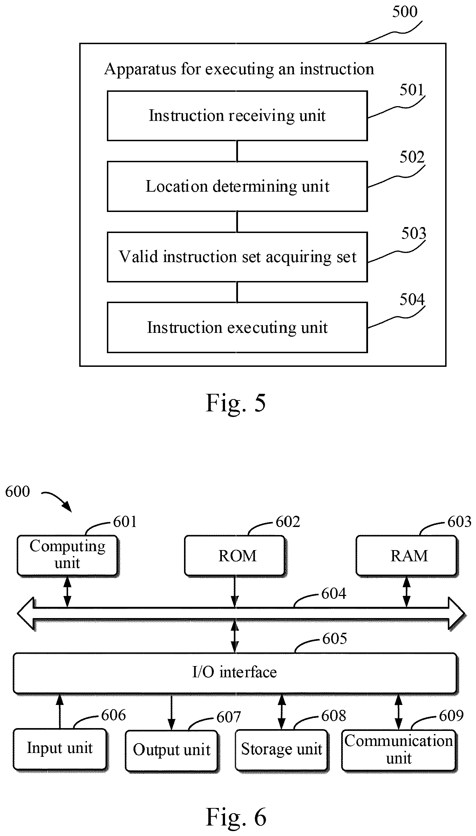

Further referring to Fig. 5, as an implementation of the method shown in the above figures, an embodiment of the present disclosure provides an apparatus for executing an instruction. The embodiment of the apparatus corresponds to the embodiment of the method shown in Fig. 2, and the apparatus may be specifically applied to various electronic devices.

As shown in Fig. 5, the apparatus 500 for executing an instruction in the present embodiment may include: an instruction receiving unit 501, a location determining unit 502, a valid instruction set acquiring set 503, and an instruction executing unit 504. The instruction receiving unit 501 is configured to receive a transmitted actual voice instruction; the location determining unit 502 is configured to determine a target location where the actual voice instruction is released; the valid instruction set acquiring unit 503 is configured to acquire a target valid instruction set corresponding to the target location; and the instruction executing unit 504 is configured to execute an operation corresponding to the actual voice instruction, in response to the actual voice instruction being a target valid instruction in the target valid instruction set.

The related description of step 201 to step 204 in the corresponding embodiment of Fig. 2 may be referred to for specific processing of the instruction receiving unit 501, the location determining unit 502, the valid instruction set acquiring set 503, and the instruction executing unit 504 of the apparatus 500 for executing an instruction in the present embodiment and the technical effects thereof, respectively. The description will not be repeated here.

In some optional implementations of the present embodiment, the apparatus 500 for executing an instruction further includes: a first instruction shielding unit configured to shield the actual voice instruction, in response to the actual voice instruction not being any target valid instruction in the target valid instruction set.

In some optional implementations of the present embodiment, the apparatus 500 for executing an instruction further includes: a valid instruction set prompting unit configured to feed back a prompt message of the target valid instruction set at the target location through a preset path, in response to a shield number of consecutively shielding identical and/or different actual voice instructions within a preset duration exceeding a preset threshold.

In some optional implementations of the present embodiment, the apparatus 500 for executing an instruction further includes: an identity information acquiring unit configured to acquire user identity information of users entering locations in a target space; a presentation manner determining unit configured to determine, in response to determining that a user of the users is a new user at a corresponding location of the locations in the target space based on the user identity information, a target presentation manner of the corresponding location where the new user is located in the target space; and a valid instruction set presenting unit configured to present a target valid instruction set corresponding to the corresponding location where the new user is located in the target space to the new user in the target presentation manner.

In some optional implementations of the present embodiment, the apparatus 500 for executing an instruction further includes: an updating request receiving unit configured to receive a transmitted instruction updating request; an updating content acquiring unit configured to acquire, in response to a sending location of the instruction updating request having an updating authority, indication information of an actual voice instruction set corresponding to the instruction updating request, content of a to-be-updated actual voice instruction and a type of an updating operation; and a valid instruction set updating unit configured to update the target valid instruction set indicated by the indication information of the actual voice instruction set based on the content of the to-be-updated actual voice instruction and the type of the updating operation.

In accordance with the invention, the apparatus 500 for executing an instruction further includes: a voice information extracting unit configured to acquire voice information in a preset duration before collecting time of collecting the actual voice instruction collection and the preset duration after the collecting time; and a second instruction shielding unit configured to shield the actual voice instruction, in response to a correlation between the voice information and the actual voice instruction being greater than a preset correlation.

In some optional implementations of the present embodiment, the apparatus 500 for executing an instruction further includes: an in-vehicle identity determining unit configured to determine an in-vehicle identity of a user releasing the actual voice instruction based on the target location; and where the valid instruction set acquiring unit is further configured to determine a target free-of-wakeup word set corresponding to the in-vehicle identity; and the instruction executing unit is further configured to execute, in response to the actual voice instruction being a target free-of-wakeup word in the target free-of-wakeup word set, an operation corresponding to the target free-of-wakeup word.

The present embodiment serves as an embodiment of the apparatus corresponding to the above embodiment of the method. When receiving a transmitted actual voice instruction, the apparatus for executing an instruction provided in the present embodiment acquires a target valid instruction set corresponding to a target location where the actual voice instruction is released, and determines whether the actual voice instruction is a valid voice instruction based on a relationship between the actual voice instruction and the target valid instruction set, thereby achieving the purpose of determining the validity of the actual voice instruction based on a location where the actual voice instruction is released, and reducing the frequency of false triggering.

According to an embodiment of the present disclosure, the present disclosure further provides an electronic device, a readable storage medium, and a computer program product.

Fig. 6 shows a schematic block diagram of an example electronic device 600 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 6, the device 600 includes a computing unit 601, which may execute various appropriate actions and processes in accordance with a computer program stored in a read-only memory (ROM) 602 or a computer program loaded into a random access memory (RAM) 603 from a storage unit 608. The RAM 603 may further store various programs and data required by operations of the device 600. The computing unit 601, the ROM 602, and the RAM 603 are connected to each other through a bus 604. An input/output (I/O) interface 605 is also connected to the bus 604.

A plurality of components in the device 600 is connected to the I/O interface 605, including: an input unit 606, such as a keyboard and a mouse; an output unit 607, such as various types of displays and speakers; a storage unit 608, such as a magnetic disk and an optical disk; and a communication unit 609, such as a network card, a modem, and a wireless communication transceiver. The communication unit 609 allows the device 600 to exchange information/data with other devices through a computer network such as the Internet and/or various telecommunication networks.

The computing unit 601 may be various general purpose and/or special purpose processing components having a processing power and a computing power. Some examples of the computing unit 601 include, but are not limited to, a central processing unit (CPU), a graphics processing unit (GPU), various special purpose artificial intelligence (AI) computing chips, various computing units running a machine learning model algorithm, a digital signal processor (DSP), and any appropriate processor, controller, micro-controller, and the like. The computing unit 601 executes various methods and processes described above, such as the method for executing an instruction. For example, in some embodiments, the method for executing an instruction may be implemented as a computer software program that is tangibly included in a machine readable medium, such as the storage unit 608. In some embodiments, some or all of the computer programs may be loaded and/or installed onto the device 600 via the ROM 602 and/or the communication unit 609. When the computer program is loaded into the RAM 603 and executed by the computing unit 601, one or more steps of the method for executing an instruction described above may be executed. Alternatively, in other embodiments, the computing unit 601 may be configured to execute the method for executing an instruction by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: an implementation in one or more computer programs that are executable and/or interpretable on a programmable system including at least one programmable processor, which may be a special purpose or general purpose programmable processor, and may receive data and instructions from, and transmit data and instructions to, a storage system, at least one input apparatus, and at least one output apparatus.

Program codes for implementing the method of the present disclosure may be compiled using any combination of one or more programming languages. The program codes may be provided to a processor or controller of a general purpose computer, a special purpose computer, or other programmable apparatuses for data processing, such that the program codes, when executed by the processor or controller, cause the functions/operations specified in the flowcharts and/or block diagrams to be implemented. The program codes may be completely executed on a machine, partially executed on a machine, executed as a separate software package on a machine and partially executed on a remote machine, or completely executed on a remote machine or server.

In the context of the present disclosure, the machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical memory device, a magnetic memory device, or any appropriate combination of the above.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback) ; and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact through a communication network. The relationship of the client and the server arises by virtue of computer programs that run on corresponding computers and have a client-server relationship with each other. The server may be a cloud server, is also known as a cloud computing server or a cloud host, and is a host product in a cloud computing service system to solve the defects of difficult management and weak service extendibility existing in conventional physical hosts and virtual private servers (VPS). The server may also be a distributed system server, or a server combined with a blockchain.

When receiving a transmitted actual voice instruction, the technical solutions according to embodiments of the present disclosure acquire a target valid instruction set corresponding to a target location where the actual voice instruction is released, and determine whether the actual voice instruction is a valid voice instruction based on a relationship between the actual voice instruction and the target valid instruction set, thereby achieving the purpose of determining the validity of the actual voice instruction based on a location where the actual voice instruction is released, and reducing the frequency of false triggering.

It should be understood that the various forms of processes shown above may be used to reorder, add, or delete steps. For example, the steps disclosed in the present disclosure may be executed in parallel, sequentially, or in different orders, as long as the desired results of the technical solutions provided in the present disclosure can be implemented. This is not limited herein.

The above specific implementations do not constitute any limitation to the scope of protection of the present disclosure. It should be understood by those skilled in the art that various modifications may be made within the scope defined by the appended claims.

## Claims

1. A method for executing an instruction, comprising:
receiving (201) a transmitted actual voice instruction;
determining (202) a target location where the actual voice instruction is released;
acquiring (203) a target valid instruction set corresponding to the target location; and
executing (204) an operation corresponding to the actual voice instruction, in response to the actual voice instruction being a target valid instruction in the target valid instruction set,
wherein after receiving the transmitted actual voice instruction, and before determining the target location where the actual voice instruction is released, the method further comprises:
acquiring voice information in a preset duration before a collecting time of collecting the actual voice instruction and the preset duration after the collecting time; and
in response to a correlation between the voice information and the actual voice instruction being greater than a preset correlation, determining that the voice information is not sent to execute the operation corresponding to the actual voice instruction, and shielding the actual voice instruction.

2. The method according to claim 1, wherein the method further comprises:
shielding the actual voice instruction, in response to the actual voice instruction not being any target valid instruction in the target valid instruction set.

3. The method according to claim 2, wherein the method further comprises:
feeding back a prompt message of the target valid instruction set at the target location through a preset path, in response to a shielding number of consecutively shielding identical and/or different actual voice instructions within a preset duration exceeding a preset threshold.

4. The method according to claim 1, wherein the method further comprises:
acquiring user identity information of users entering locations in a target space;
determining, in response to determining that a user of the users is a new user at a corresponding location of the locations in the target space based on the user identity information, a target presentation manner of the corresponding location where the new user is located in the target space; and
presenting a target valid instruction set corresponding to the corresponding location where the new user is located in the target space to the new user in the target presentation manner.

5. The method according to claim 1, wherein the method further comprises:
receiving a transmitted instruction updating request;
acquiring, in response to a sending location of the instruction updating request having an updating authority, indication information of an actual voice instruction set corresponding to the instruction updating request, content of a to-be-updated actual voice instruction and a type of an updating operation; and
updating the target valid instruction set indicated by the indication information of the actual voice instruction set based on the content of the to-be-updated actual voice instruction and the type of the updating operation.

6. The method according to claim 1, wherein the method further comprises:
determining (303) an in-vehicle identity of a user releasing the actual voice instruction based on the target location; and
determining the target valid instruction set corresponding to the target location comprises:
determining (304) a target free-of-wakeup word set corresponding to the in-vehicle identity; and
executing the operation corresponding to the actual voice instruction, in response to the actual voice instruction being the target valid instruction in the target valid instruction set, comprises:
executing (305), in response to the actual voice instruction being a target free-of-wakeup word in the target free-of-wakeup word set, an operation corresponding to the target free-of-wakeup word.

7. An apparatus for executing an instruction, comprising:
an instruction receiving unit (501) configured to receive a transmitted actual voice instruction;
a location determining unit (502) configured to determine a target location where the actual voice instruction is released;
a valid instruction set acquiring unit (503) configured to acquire a target valid instruction set corresponding to the target location; and
an instruction executing unit (504) configured to execute an operation corresponding to the actual voice instruction, in response to the actual voice instruction being a target valid instruction in the target valid instruction set,
wherein the apparatus further comprises:
a voice information extracting unit configured to acquire voice information in a preset duration before a collecting time of collecting the actual voice instruction and the preset duration after the collecting time; and
a second instruction shielding unit configured to determine that the voice information is not sent to execute the operation corresponding to the actual voice instruction and shield the actual voice instruction, in response to a correlation between the voice information and the actual voice instruction being greater than a preset correlation.

8. The apparatus according to claim 7, wherein the apparatus further comprises:
a first instruction shielding unit configured to shield the actual voice instruction, in response to the actual voice instruction not being any target valid instruction in the target valid instruction set.

9. The apparatus according to claim 8, wherein the apparatus further comprises:
a valid instruction set prompting unit configured to feed back a prompt message of the target valid instruction set at the target location through a preset path, in response to a shielding number of consecutively shielding identical and/or different actual voice instructions within a preset duration exceeding a preset threshold.

10. The apparatus according to claim 7, wherein the apparatus further comprises:
an identity information acquiring unit configured to acquire user identity information of users entering locations in a target space;
a presentation manner determining unit configured to determine, in response to determining that a user of the users is a new user at a corresponding location of the locations in the target space based on the user identity information, a target presentation manner of the target location where the new user is located in the target space; and
a valid instruction set presenting unit configured to present a target valid instruction set corresponding to the corresponding location where the new user is located in the target space to the new user in the target presentation manner.

11. The apparatus according to claim 7, wherein the apparatus further comprises:
an updating request receiving unit configured to receive a transmitted instruction updating request;
an updating content acquiring unit configured to acquire, in response to a sending location of the instruction updating request having an updating authority, indication information of an actual voice instruction set corresponding to the instruction updating request, content of a to-be-updated actual voice instruction and a type of an updating operation; and
a valid instruction set updating unit configured to update the target valid instruction set indicated by the indication information of the actual voice instruction set based on the content of the to-be-updated actual voice instruction and the type of the updating operation.

12. The apparatus according to claim 7, wherein the apparatus further comprises:
an in-vehicle identity determining unit configured to determine an in-vehicle identity of a user releasing the actual voice instruction based on the target location; and
wherein the valid instruction set acquiring unit is further configured to determine a target free-of-wakeup word set corresponding to the in-vehicle identity; and
the instruction executing unit is further configured to execute, in response to the actual voice instruction being a target free-of-wakeup word in the target free-of-wakeup word set, an operation corresponding to the target free-of-wakeup word.

13. An electronic device, comprising:
at least one processor; and
a memory communicatively connected to the at least one processor; wherein
the memory stores instructions executable by the at least one processor, and the instructions are executed by the at least one processor, such that the at least one processor can execute the method for executing an instruction according to any one of claims 1 to 6.

14. A non-transitory computer readable storage medium storing computer instructions, wherein the computer instructions are used for causing a computer to execute the method for executing an instruction according to any one of claims 1 to 6.

15. A computer program product, comprising a computer program, wherein the computer program, when executed by a processor, implements the method for executing an instruction according to any one of claims 1 to 6.

## Patentansprüche

1. Verfahren zum Ausführen eines Befehls, das Folgendes umfasst:
Empfangen (201) eines übertragenen tatsächlichen Sprachbefehls;
Bestimmen (202) eines Zielorts, an dem der tatsächliche Sprachbefehl freigegeben wird;
Erfassen (203) eines gültigen Zielbefehlssatzes, der dem Zielort entspricht; und
Ausführen (204) einer Operation, die dem tatsächlichen Sprachbefehl entspricht, als Reaktion darauf, dass der tatsächliche Sprachbefehl ein gültiger Zielbefehl in dem gültigen Zielbefehlssatz ist,
wobei nach dem Empfangen des übertragenen tatsächlichen Sprachbefehls und vor dem Bestimmen des Zielorts, an dem der tatsächliche Sprachbefehl freigegeben wird, das Verfahren ferner Folgendes umfasst:
Erfassen von Sprachinformationen in einer voreingestellten Dauer vor einer Sammelzeit zum Sammeln des tatsächlichen Sprachbefehls und der voreingestellten Dauer nach der Sammelzeit; und
als Reaktion darauf, dass eine Wechselbeziehung zwischen den Sprachinformationen und dem tatsächlichen Sprachbefehl größer als eine voreingestellte Wechselbeziehung ist, Bestimmen, dass die Sprachinformationen nicht gesendet werden, um die Operation auszuführen, die dem tatsächlichen Sprachbefehl entspricht, und Abschirmen des tatsächlichen Sprachbefehls.

2. Verfahren nach Anspruch 1, wobei das Verfahren ferner Folgendes umfasst:
Abschirmen des tatsächlichen Sprachbefehls als Reaktion darauf, dass der tatsächliche Sprachbefehl kein gültiger Zielbefehl in dem gültigen Zielbefehlssatz ist.

3. Verfahren nach Anspruch 2, wobei das Verfahren ferner Folgendes umfasst:
Rückmelden einer Eingabeaufforderung des gültigen Zielbefehlssatzes an dem Zielort über einen voreingestellten Pfad als Reaktion darauf, dass eine Abschirmungsanzahl aufeinanderfolgender Abschirmungen identischer und/oder verschiedener tatsächlicher Sprachbefehle innerhalb einer voreingestellten Dauer eine voreingestellte Schwelle überschreitet.

4. Verfahren nach Anspruch 1, wobei das Verfahren ferner Folgendes umfasst:
Erfassen von Benutzeridentitätsinformationen von Benutzern, die Standorte in einem Zielraum betreten;
Bestimmen, als Reaktion auf das Bestimmen, dass ein Benutzer der Benutzer ein neuer Benutzer an einem entsprechenden Standort der Standorte in dem Zielraum ist, basierend auf den Benutzeridentitätsinformationen, einer Zielpräsentationsart des entsprechenden Standorts, an dem sich der neue Benutzer in dem Zielraum befindet; und
Präsentieren eines gültigen Zielbefehlssatzes, der dem entsprechenden Standort entspricht, an dem sich der neue Benutzer in dem Zielraum befindet, für den neuen Benutzer in der Zielpräsentationsart.

5. Verfahren nach Anspruch 1, wobei das Verfahren ferner Folgendes umfasst:
Empfangen einer übertragenen Befehlsaktualisierungsanforderung;
Erfassen, als Reaktion darauf, dass ein Sendeort der Befehlsaktualisierungsanforderung eine Aktualisierungsbefugnis hat, von Anzeigeinformationen eines tatsächlichen Sprachbefehlssatzes, der der Befehlsaktualisierungsanforderung entspricht, des Inhalts eines zu aktualisierenden tatsächlichen Sprachbefehls und einer Art einer Aktualisierungsoperation; und
Aktualisieren des gültigen Zielbefehlssatzes, der durch die Anzeigeinformationen des tatsächlichen Sprachbefehlssatzes angezeigt wird, basierend auf dem Inhalt des zu aktualisierenden tatsächlichen Sprachbefehls und der Art der Aktualisierungsoperation.

6. Verfahren nach Anspruch 1, wobei das Verfahren ferner Folgendes umfasst:
Bestimmen (303) einer fahrzeuginternen Identität eines Benutzers, der den tatsächlichen Sprachbefehl freigibt, basierend auf dem Zielort; und
wobei das Bestimmen des gültigen Zielbefehlssatzes, der dem Zielort entspricht, Folgendes umfasst:
Bestimmen (304) eines Free-of-Wakeup-Zielwortsatzes, der der fahrzeuginternen Identität entspricht; und
wobei das Ausführen der Operation, die dem tatsächlichen Sprachbefehl entspricht, als Reaktion darauf, dass der tatsächliche Sprachbefehl der gültige Zielbefehl in dem gültigen Zielbefehlssatz ist, Folgendes umfasst:
Ausführen (305), als Reaktion darauf, dass der tatsächliche Sprachbefehl ein Free-of-Wakeup-Zielwort in dem Free-of-Wakeup-Zielwortsatz ist, einer Operation, die dem Free-of-Wakeup-Zielwort entspricht.

7. Vorrichtung zum Ausführen eines Befehls, die Folgendes umfasst:
eine Befehlsempfangseinheit (501), die konfiguriert ist, um einen übertragenen tatsächlichen Sprachbefehl zu empfangen;
eine Standortbestimmungseinheit (502), die konfiguriert ist, um einen Zielort zu bestimmen, an dem der tatsächliche Sprachbefehl freigegeben wird;
eine gültige Befehlssatz-Erfassungseinheit (503), die konfiguriert ist, um einen gültigen Zielbefehlssatz zu erfassen, der dem Zielort entspricht; und
eine Befehlsausführungseinheit (504), die konfiguriert ist, um eine Operation, die dem tatsächlichen Sprachbefehl entspricht, als Reaktion darauf auszuführen, dass der tatsächliche Sprachbefehl ein gültiger Zielbefehl in dem gültigen Zielbefehlssatz ist,
wobei die Vorrichtung ferner Folgendes umfasst:
eine Sprachinformations-Extraktionseinheit, die konfiguriert ist, um Sprachinformationen in einer voreingestellten Dauer vor einer Sammelzeit des Sammelns des tatsächlichen Sprachbefehls und in der voreingestellten Dauer nach der Sammelzeit zu erfassen; und
eine zweite Befehlsabschirmungseinheit, die konfiguriert ist, um zu bestimmen, dass die Sprachinformationen nicht gesendet werden, um die Operation auszuführen, die dem tatsächlichen Sprachbefehl entspricht, und den tatsächlichen Sprachbefehl abzuschirmen, als Reaktion darauf, dass eine Wechselbeziehung zwischen den Sprachinformationen und dem tatsächlichen Sprachbefehl größer als eine voreingestellte Wechselbeziehung ist.

8. Vorrichtung nach Anspruch 7, wobei die Vorrichtung ferner Folgendes umfasst:
eine erste Befehlsabschirmungseinheit, die konfiguriert ist, um den tatsächlichen Sprachbefehl abzuschirmen, als Reaktion darauf, dass der tatsächliche Sprachbefehl kein gültiger Zielbefehl in dem gültigen Zielbefehlssatz ist.

9. Vorrichtung nach Anspruch 8, wobei die Vorrichtung ferner Folgendes umfasst:
eine gültige Befehlssatz-Eingabeaufforderungseinheit, die konfiguriert ist, um eine Eingabeaufforderungsnachricht des gültigen Zielbefehlssatzes an dem Zielort durch einen voreingestellten Pfad zurückzumelden, als Reaktion darauf, dass eine Abschirmungsanzahl aufeinanderfolgender Abschirmungen identischer und/oder verschiedener tatsächlicher Sprachbefehle innerhalb einer voreingestellten Dauer eine voreingestellte Schwelle überschreitet.

10. Vorrichtung nach Anspruch 7, wobei die Vorrichtung ferner Folgendes umfasst:
eine Identitätsinformations-Erfassungseinheit, die konfiguriert ist, um Benutzeridentitätsinformationen von Benutzern zu erfassen, die Standorte in einem Zielraum betreten;
eine Präsentationsart-Bestimmungseinheit, die konfiguriert ist, um, als Reaktion auf das Bestimmen, dass ein Benutzer der Benutzer ein neuer Benutzer an einem entsprechenden Standort der Standorte in dem Zielraum ist, basierend auf den Benutzeridentitätsinformationen eine Zielpräsentationsart des Zielorts zu bestimmen, an dem sich der neue Benutzer in dem Zielraum befindet; und
eine gültige Befehlssatz-Präsentationseinheit, die konfiguriert ist, um dem neuen Benutzer in der Zielpräsentationsart einen gültigen Zielbefehlssatz zu präsentieren, der dem entsprechenden Standort entspricht, an dem sich der neue Benutzer in dem Zielraum befindet.

11. Vorrichtung nach Anspruch 7, wobei die Vorrichtung ferner Folgendes umfasst:
eine Aktualisierungsanforderungs-Empfangseinheit, die konfiguriert ist, um eine übertragene Befehlsaktualisierungsanforderung zu empfangen;
eine Aktualisierungsinhalts-Erfassungseinheit, die konfiguriert ist, um, als Reaktion darauf, dass ein Sendeort der Befehlsaktualisierungsanforderung eine Aktualisierungsbefugnis hat, Anzeigeinformationen eines tatsächlichen Sprachbefehlssatzes, der der Befehlsaktualisierungsanforderung entspricht, Inhalt eines zu aktualisierenden tatsächlichen Sprachbefehls und eine Art einer Aktualisierungsoperation zu erfassen; und
eine gültige Befehlssatz-Aktualisierungseinheit, die konfiguriert ist, um den gültigen Zielbefehlssatz zu aktualisieren, der von den Anzeigeinformationen des tatsächlichen Sprachbefehlssatzes angezeigt wird, basierend auf dem Inhalt des zu aktualisierenden tatsächlichen Sprachbefehls und der Art der Aktualisierungsoperation.

12. Vorrichtung nach Anspruch 7, wobei die Vorrichtung ferner Folgendes umfasst:
eine fahrzeuginterne Identitätsbestimmungseinheit, die konfiguriert ist, um eine fahrzeuginterne Identität eines Benutzers zu bestimmen, der den tatsächlichen Sprachbefehl freigibt, basierend auf dem Zielort; und
wobei die gültige Befehlssatz-Erfassungseinheit ferner konfiguriert ist, um einen Free-of-Wakeup-Zielwortsatz zu bestimmen, der der fahrzeuginternen Identität entspricht; und
die Befehlsausführungseinheit ferner konfiguriert ist, um, als Reaktion darauf, dass der tatsächliche Sprachbefehl ein Free-of-Wakeup-Zielwort in dem Free-of-Wakeup-Zielwortsatz ist, eine Operation auszuführen, die dem Free-of-Wakeup-Zielwort entspricht.

13. Elektronische Vorrichtung, die Folgendes umfasst:
mindestens einen Prozessor; und
einen Speicher, der kommunikativ mit dem mindestens einen Prozessor verbunden ist; wobei
der Speicher Befehle speichert, die von dem mindestens einen Prozessor ausgeführt werden können, und die Befehle von dem mindestens einen Prozessor ausgeführt werden, so dass der mindestens eine Prozessor das Verfahren zum Ausführen eines Befehls nach einem der Ansprüche 1 bis 6 ausführen kann.

14. Nichtflüchtiges computerlesbares Speichermedium, das Computerbefehle speichert, wobei die Computerbefehle verwendet werden, um einen Computer zu veranlassen, das Verfahren zum Ausführen eines Befehls nach einem der Ansprüche 1 bis 6 auszuführen.

15. Computerprogrammprodukt, das ein Computerprogramm umfasst, wobei das Computerprogramm, wenn es von einem Prozessor ausgeführt wird, das Verfahren zum Ausführen eines Befehls nach einem der Ansprüche 1 bis 6 implementiert.

## Revendications

1. Procédé pour exécuter une instruction, comprenant :
recevoir (201) une instruction vocale réelle transmise ;
déterminer (202) un emplacement cible où l'instruction vocale réelle est diffusée ;
acquérir (203) un ensemble d'instructions cible valides correspondant à l'emplacement cible ; et
exécuter (204) une opération correspondant à l'instruction vocale réelle, en réponse à l'instruction vocale réelle étant une instruction cible valide dans l'ensemble d'instructions cible valides,
où, après avoir reçu l'instruction vocale réelle transmise et avant de déterminer l'emplacement cible où l'instruction vocale réelle est diffusée, le procédé comprend en outre :
acquérir des informations vocales pendant une durée prédéfinie avant un temps de collecte pour collecter l'instruction vocale réelle et la durée prédéfinie après le temps de collecte ; et
en réponse à une corrélation entre les informations vocales et l'instruction vocale réelle étant supérieure à une corrélation prédéfinie, déterminer que les informations vocales ne sont pas envoyées pour exécuter l'opération correspondant à l'instruction vocale réelle, et protéger l'instruction vocale réelle.

2. Procédé selon la revendication 1, où le procédé comprend en outre :
protéger l'instruction vocale réelle, en réponse à l'instruction vocale réelle n'étant pas une quelconque instruction cible valide dans l'ensemble d'instructions cible valides.

3. Procédé selon la revendication 2, où le procédé comprend en outre :
renvoyer un message d'invite de l'ensemble d'instructions cible valides à l'emplacement cible à travers un chemin prédéfini, en réponse à un nombre de protection d'instructions vocales réelles identiques et/ou différentes de protection consécutives pendant une durée prédéfinie excédant un seuil prédéfini.

4. Procédé selon la revendication 1, où le procédé comprend en outre :
acquérir des informations d'identité utilisateur d'utilisateurs entrant dans des emplacements dans un espace cible ;
déterminer, en réponse à la détermination qu'un utilisateur parmi les utilisateurs est un nouvel utilisateur à un emplacement correspondant des emplacements dans l'espace cible sur la base des informations d'identité utilisateur, un mode de présentation cible de l'emplacement correspondant où le nouvel utilisateur est situé dans l'espace cible ; et
présenter un ensemble d'instructions cible valides correspondant à l'emplacement correspondant où se trouve le nouvel utilisateur dans l'espace cible au nouvel utilisateur dans le mode de présentation cible.

5. Procédé selon la revendication 1, où le procédé comprend en outre :
recevoir une requête de mise à jour d'instruction transmise ;
acquérir, en réponse à un emplacement d'envoi de la requête de mise à jour d'instruction ayant une autorité de mise à jour, des informations d'indication d'un ensemble d'instructions vocales réelles correspondant à la requête de mise à jour d'instruction, un contenu d'une instruction vocale réelle à mettre à jour et un type d'opération de mise à jour ; et
mettre à jour l'ensemble d'instructions cible valides indiqué par les informations d'indication de l'ensemble d'instructions vocales réelles sur la base du contenu de l'instruction vocale réelle à mettre à jour et du type de l'opération de mise à jour.

6. Procédé selon la revendication 1, où le procédé comprend en outre :
déterminer (303) une identité à bord du véhicule d'un utilisateur diffusant l'instruction vocale réelle sur la base de l'emplacement cible ; et
déterminer l'ensemble d'instructions cible valides correspondant à l'emplacement cible comprend :
déterminer (304) un ensemble de mots cible libre de réveil correspondant à l'identité à bord du véhicule ; et
exécuter l'opération correspondant à l'instruction vocale réelle, en réponse à l'instruction vocale réelle étant l'instruction cible valide dans l'ensemble d'instructions cible valides, comprend :
exécuter (305), en réponse à l'instruction vocale réelle étant un mot cible libre de réveil dans l'ensemble de mots cible libres de réveil, une opération correspondant au mot cible libre de réveil.

7. Appareil pour exécuter une instruction, comprenant :
une unité de réception d'instructions (501) configurée pour recevoir une instruction vocale réelle transmise ;
une unité de détermination d'emplacement (502) configurée pour déterminer un emplacement cible où l'instruction vocale réelle est diffusée ;
une unité d'acquisition d'ensemble d'instructions valides (503) configurée pour acquérir un ensemble d'instructions cible valides correspondant à l'emplacement cible ; et
une unité d'exécution d'instructions (504) configurée pour exécuter une opération correspondant à l'instruction vocale réelle, en réponse à l'instruction vocale réelle étant une instruction cible valide dans l'ensemble d'instructions cible valides,
où l'appareil comprend en outre :
une unité d'extraction d'informations vocales configurée pour acquérir des informations vocales pendant une durée prédéfinie avant un temps de collecte pour collecter l'instruction vocale réelle et la durée prédéfinie après le temps de collecte ; et
une deuxième unité de protection d'instructions configurée pour déterminer que les informations vocales ne sont pas envoyées pour exécuter l'opération correspondant à l'instruction vocale réelle et pour protéger l'instruction vocale réelle, en réponse à une corrélation entre les informations vocales et l'instruction vocale réelle étant supérieure à une corrélation prédéfinie.

8. Appareil selon la revendication 7, où l'appareil comprend en outre :
une première unité de protection d'instructions configurée pour protéger l'instruction vocale réelle, en réponse à l'instruction vocale réelle n'étant pas une quelconque instruction cible valide dans l'ensemble d'instructions cible valides.

9. Appareil selon la revendication 8, où l'appareil comprend en outre :
une unité d'invite d'ensemble d'instructions valides configurée pour renvoyer un message d'invite de l'ensemble d'instructions cible valides à l'emplacement cible à travers un chemin prédéfini, en réponse à un nombre de protection d'instructions vocales réelles identiques et/ou différentes de protection consécutives pendant une durée prédéfinie excédant un seuil prédéfini.

10. Appareil selon la revendication 7, où l'appareil comprend en outre :
une unité d'acquisition d'informations d'identité configurée pour acquérir des informations d'identité utilisateur d'utilisateurs entrant dans des emplacements dans un espace cible ;
une unité de détermination de mode de présentation configurée pour déterminer, en réponse à la détermination qu'un utilisateur parmi les utilisateurs est un nouvel utilisateur à un emplacement correspondant des emplacements dans l'espace cible sur la base des informations d'identité utilisateur, un mode de présentation cible de l'emplacement cible où le nouvel utilisateur est situé dans l'espace cible ; et
une unité de présentation d'ensemble d'instructions valides configurée pour présenter un ensemble d'instructions valides correspondant à l'emplacement correspondant où se trouve le nouvel utilisateur dans l'espace cible au nouvel utilisateur dans le mode de présentation cible.

11. Appareil selon la revendication 7, où l'appareil comprend en outre :
une unité de réception de requête de mise à jour configurée pour recevoir une requête de mise à jour d'instruction transmise ;
une unité d'acquisition de contenu de mise à jour configurée pour acquérir, en réponse à un emplacement d'envoi de la requête de mise à jour d'instruction ayant une autorité de mise à jour, des informations d'indication d'un ensemble d'instructions vocales réelles correspondant à la requête de mise à jour d'instruction, le contenu d'une instruction vocale réelle à mettre à jour et un type d'une opération de mise à jour ; et
une unité de mise à jour d'ensemble d'instructions valides configurée pour mettre à jour l'ensemble d'instructions cible valides indiqué par les informations d'indication de l'ensemble d'instructions vocales réelles sur la base du contenu de l'instruction vocale réelle à mettre à jour et du type de l'opération de mise à jour.

12. Appareil selon la revendication 7, où l'appareil comprend en outre :
une unité de détermination de l'identité à bord du véhicule configurée pour déterminer une identité à bord du véhicule d'un utilisateur diffusant l'instruction vocale réelle sur la base de l'emplacement cible ; et
où l'unité d'acquisition d'ensemble d'instructions valide est en outre configurée pour déterminer un ensemble de mots cible libre de réveil correspondant à l'identité à bord du véhicule ; et
l'unité d'exécution d'instructions est en outre configurée pour exécuter, en réponse à l'instruction vocale réelle étant un mot cible libre de réveil dans l'ensemble de mots cible libre de réveil, une opération correspondant au mot cible libre de réveil.

13. Dispositif électronique, comprenant :
au moins un processeur ; et
une mémoire connectée de manière communicative à l'au moins un processeur ; où
la mémoire stocke des instructions exécutables par l'au moins un processeur, et les instructions sont exécutées par l'au moins un processeur, de sorte que l'au moins un processeur peut exécuter le procédé pour exécuter une instruction selon l'une quelconque des revendications 1 à 6.

14. Support de stockage non transitoire lisible par ordinateur stockant des instructions informatiques, où les instructions informatiques sont utilisées pour amener un ordinateur à exécuter le procédé pour exécuter une instruction selon l'une quelconque des revendications 1 à 6.

15. Produit de programme informatique, comprenant un programme informatique, où le programme informatique, lorsqu'il est exécuté par un processeur, met en oeuvre le procédé pour exécuter une instruction selon l'une quelconque des revendications 1 à 6.
